# EUROPÄISCHE PATENTSCHRIFT

(11) **EP 0 890 047 B1**
(45) Veröffentlichungstag und Bekanntmachung des Hinweises auf die Patenterteilung: **24.05.2000**
(21) Anmeldenummer: 97908280.7
(22) Anmeldetag: 21.03.1997
(51) Int. Cl.: F16H 61/06, F16H 59/06

(54) **VERFAHREN ZUR DRUCKSTEUERUNG EINES CVT**
PROCESS FOR CONTROLLING THE PRESSURE OF A CVT
PROCEDE POUR REGULER LA PRESSION D'UNE TRANSMISSION DE TYPE CVT

(30) Priorität: 30.03.1996 DE 19612870
(43) Veröffentlichungstag der Anmeldung: 13.01.1999
(73) Patentinhaber: ZF-Batavia, L.L.C., Plymouth, Michigan 48170-2456 (US)
(72) Erfinder: VORNDRAN, Ralf, D-88131 Bodolz (DE); KARRER, Rolf, D-88079 Kressbronn (DE)
(74) Vertreter: Zietlow, Karl-Peter
(86) Internationale Anmeldenummer: EP9701433
(87) Internationale Veröffentlichungsnummer: WO9737159

(56) Entgegenhaltungen:
- DE-A- 4 104 542
- PATENT ABSTRACTS OF JAPAN, unexamined applications, M Field, Band 18, Nr. 34, ver!ffentlicht 1994, 19 Januar, THE PATENT OFFICE JAPANESE GOVERNMENT, Seite 64 M 1544; & JP,A,05 263 906 (FUJI HEAVY).
- PATENT ABSTRACTS OF JAPAN, Band 95, Nr. 10, 30 November 1995; & JP,A,07 174 218 (FUJI HEAVY), 11 Juli 1995.
- PATENT ABSTRACTS OF JAPAN, unexamined applications, M field, Band 14, Nr. 135, ver!ffentlicht 1990, 14 M rz, THE PATENT OFFICE JAPANESE GOVERNMENT, Seite 29 M 949; & JP,A,02 003 772 (AISIN).

## Beschreibung

Die Erfindung betrifft ein Verfahren zur Drucksteuerung eines CVT des Kegelscheibenumschlingungstyps bei dem nach Einlegen einer Fahrposition über das Druckniveau in der Primär- und Sekundärscheibe die Übersetzung und Momenten-Übertragungsfähigkeit bestimmt wird.

Stufenlose Automatgetriebe des Kegelscheibenumschlingungstyps, nachfolgend CVT genannt (Continuously Variabel Transmission), bestehen aus folgenden Baugruppen: Anfahreinheit, Vorwärts-/Rückwärtsfahreinheit, Variator, Zwischenwelle, Differential, hydraulischem und elektronischem Steuergerät. Ein derartiger Aufbau ist aus der ATZ Automobiltechnische Zeitschrift 96 (1994) 6, Seite 380, bekannt. Der Variator wiederum besteht aus einem antriebsseitig angeordneten ersten Kegelscheibenpaar mit einer hydraulischen Verstelleinheit, einem abtriebsseitig angeordneten zweiten Kegelscheibenpaar mit ebenfalls einer hydraulischen Verstelleinheit und einem Umschlingungsorgan, das zwischen den Kegelscheiben läuft. Jedes Kegelscheibenpaar wiederum besteht aus einer in axialer Richtung feststehenden und einer in axialer Richtung beweglichen Kegelscheibe. Die auf der Antriebsseite angeordnete bewegliche Kegelscheibe wird nachfolgend als Primärscheibe bezeichnet. Die auf der Abtriebsseite angeordnete bewegliche Kegelscheibe wird nachfolgend als Sekundärscheibe bezeichnet. Die axiale Position der Primärscheibe bestimmt den Laufradius des Umschlingungsorgans und somit die Übersetzung des CVT. Die axiale Position der Sekundärscheibe bestimmt den Anpreßdruck Sekundärscheibe/Umschlingungsorgan und somit die Momenten-Übertragungsfähigkeit. Die Verstellung der Primär- und Sekundärscheibe geschieht über das Druckniveau in der jeweiligen hydraulischen Verstelleinheit. Diese Druckniveaus werden mittels eines elektro-magnetischen Druckreglers, der sich im hydraulischen Steuergerät befindet, durch das elektronische Steuergerät bestimmt. In diesem Zusammenhang ist aus der Antriebstechnik 32 (1993) Nr. 9, Seite 57 bis 60, ein Verfahren zur Bestimmung der Anpreßkraft der Sekundärscheibe bekanntgeworden. Bei diesem Verfahren tritt nun das Problem auf, daß die Momenten-Übertragungsfähigkeit des Variators bei erstmaliger Momenten-Beaufschlagung nach einem entspannten Zustand, z. B. Motor aus oder Fahrposition Neutral/Parken, nicht gewährleistet ist. Der Grund hierfür ist das Druckniveau in der Primärscheibe. In der Anfahrübersetzung befindet sich die Primärscheibe am mechanischen Anschlag, d. h. der Verstellraum ist drucklos und das Umschlingungsorgan läuft auf seinem minimalen Laufradius. Als Folge hiervon kann Schlupf auftreten, was wiederum zu einer Schädigung des Umschlingungsorgans und der Kegelscheiben führen kann.

Aus der JP-A-5-263906 ist ein stufenloses Getriebe bekanntgeworden, bei dem ein Kriechmoment (creep torque) erzeugt wird, wenn aus der Neutral-Position in Vorwärts- oder Rückwärtsfahr-Position geschaltet wird. Dieses Kriechmoment wird durch Reibungskräfte, die zwischen den Kegelscheibenpaaren und dem Umschlingungsorgan auftreten, kompensiert.

Ein weiteres Problem tritt bei den Reversierschaltungen auf. Reversierschaltungen sind Fahrpositionsänderungen von einer Vorwärtsfahrstufe nach rückwärts bzw. vice versa. Bedingt durch die Drehrichtungsumkehr ändert sich der Spirallauf des Umschlingungsorgans, so daß die Elemente des Umschlingungsorgans in umgekehrter Richtung aneinander zur Anlage kommen. Dieser Vorgang wird von einem Fahrer als Stoß empfunden, der den Schaltkomfort beeinträchtigt.

Die Erfindung hat somit zur Aufgabe, eine sichere Momenten-Übertragung mit Einlegen einer Fahrposition zu gewährleisten.

Die Aufgabe wird erfindungsgemäß durch die Merkmale der Ansprüche 1 bzw. 4 bzw. 6 gelöst. Mit Erkennen des Verlassens einer Position Neutral oder Parken und Einlegen einer Vorwärts- oder Rückwärtsfahrposition mittels eines Wählhebels wird gemäß Anspruch 1 ein erhöhtes erstes Druckniveau p1 in der Primär- und Sekundärscheibe ausgegeben. Das Druckniveau der Primärscheibe wird derart bestimmt, daß das Übersetzungsverhältnis nicht verändert wird. Die erfindungsgemäße Lösung bietet den Vorteil, daß die Momenten-übertragungsfähigkeit der Primärscheibe unmittelbar gegeben ist. Es muß somit nicht, wie beim Stand der Technik beschrieben, erst ein bestimmter Verdrehwinkel der Primärscheibe abgewartet werden.

In einer Ausgestaltung hierzu wird vorgeschlagen, daß mit Erkennen einer Fahrposition eine Zeitstufe gestartet wird, während der das Druckniveau in der Primär- und Sekundärscheibe vom ersten Druckniveau p1 über eine Kennlinie auf ein zweites Druckniveau p2 reduziert wird. Das zweite Druckniveau wird hierbei nach einem Algorithmus berechnet. Dieser ist aus dem genannten Stand der Technik bekannt.

In einer weiteren Ausgestaltung wird vorgeschlagen, daß mit Erkennen einer Fahrstufe das Druckniveau der Primär- und Sekundärscheibe auf ein drittes Druckniveau eingestellt wird, wenn eine Fahrpedalstellung einen Grenzwert überschreitet. Dieses dritte Druckniveau liegt dabei höher als das erste Druckniveau.

Als zweite Lösung der erfindungsgemäßen Aufgabe gemäß Anspruch 4 wird vorgeschlagen, daß mit Reversieren des Wählhebels von einer Vorwärts- zu einer Rückwärtsfahrstufe bzw. vice versa die Betätigung der Vorwärts- oder Rückwärtsfahrkupplung um eine Zeit T2 verzögert wird. Während der Zeit T2 wird das Druckniveau in der Primär- als auch in der Sekundärscheibe zu Null verringert, so daß sich das System Kegelscheiben-/Umschlingungsorgan vollständig entspannt.

Als dritte Lösung der erfindungsgemäßen Aufgabe gemäß Anspruch 6 wird vorgeschlagen, daß beim Reversieren des Wählhebels (10) von einer Vorwärts- zur Rückwärtsfahrstufe bzw. vice versa im abschaltenden Schaltelement das Druckniveau nicht auf Null reduziert wird, sondern ein Restdruck (pR) eingestellt wird, so daß sich am abschaltenden Schaltelement ein Schleppmoment einstellt. Der Restdruck (pR) wird hierbei so gewählt, daß die primärseitigen Drehmassen beim Durchlaufen der Variatorlose gedämpft werden.

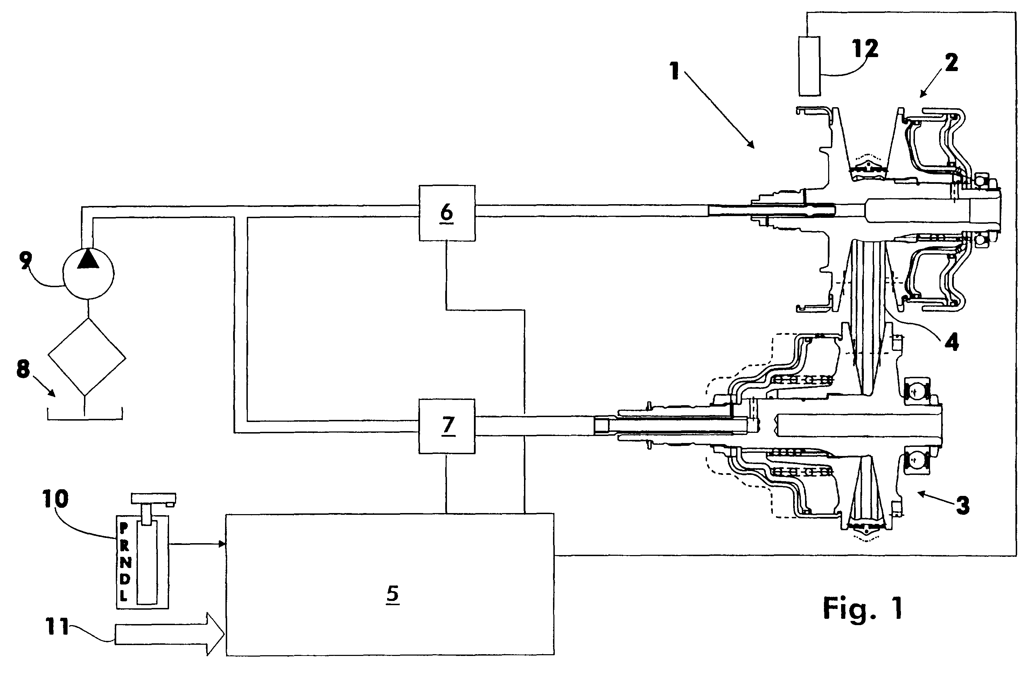

In der einzigen Figur ist ein Ausführungsbeispiel der Erfindung dargestellt. Dargestellt ist ein reduziertes Systemschaubild eines CVTs. Der vollständige Aufbau ist aus der ATZ Automobiltechnische Zeitschrift 96 (1994) 6, Seite 380, bekannt. Der genannte Artikel gehört mit zur Offenbarung der vorliegenden Anmeldung. Mit Bezugszeichen 1 ist ein Variator dargestellt, bestehend aus einem Primräscheibenpaar 2, einem Sekundärscheibenpaar 3 und einem Umschlingungsorgan 4. Das Druckniveau in der Primärscheibe wird über einen elektro-magnetischen Druckregler 6 bestimmt. Das Druckniveau in der Sekundärscheibe wird über einen elektro-magnetischen Druckregler 7 bestimmt. Gespeist werden die beiden Druckregler 6 und 7 von einer Pumpe 9, welche das Druckmedium aus einem Schmiermittelsumpf 8 über einen Filter ohne Bezugszeichen fördert. Angesteuert werden die beiden elektro-magnetischen Druckregler 6 und 7 von einer elektronischen Getriebesteuerung 5. Die elektronische Getriebesteuerung 5 berechnet aus Eingangsgrößen 11 die Funktionsparameter des CVT. Eingangsgrößen 11 sind z. B. das Signal einer Drosselklappe, das Signal der Drehzahl der Antriebseinheit, die Temperatur des Hydraulikmediums und das Druckniveau der Sekundärscheibe bzw. der Systemdruck. Als weitere Eingangsgröße ist die Drehzahl der Primärscheibe 12 und das Signal eines Positionswählhebels 10 eingezeichnet. Mittels des Positionswählhebels 10 gibt bekanntermaßen ein Fahrer die Fahrstufe und Fahrtrichtung vor.

Der Ablauf des Verfahrens ist folgendermaßen:
Nach Erkennen einer Vorwärts- oder Rückwärtsfahrstufe aus der Position N oder P heraus wird ein erhöhtes erstes Druckniveau pl in der Primär- und Sekundärscheibe ausgegeben. Dieses Druckniveau pl ist hierbei unabhängig von dem aus dem Stand der Technik bekannten Algorithmus. Der für die Primärscheibe vorgegebene Druck wird hierbei so gewählt, daß, ausgehend von der aktuellen Übersetzung, keine Übersetzungsänderung erfolgt. Das Übersetzungsverhältnis bleibt somit unverändert. Ausgehend vom ersten Druckniveau p1 wird das Druckniveau in der Primär- und Sekundärscheibe gemäß einer Übergangsfunktion auf ein zweites Druckniveau p2 verringert. Das Druckniveau p2 wiederum entspricht hierbei dem aus dem Algorithmus berechneten Druckniveau. Tritt nun der Fall auf, daß ein erhöhtes Getriebeeingangsmoment, z. B. indem der Fahrer das Fahrpedal betätigt, erkannt wird, so wird sofort ein drittes Druckniveau p3 eingestellt. Dieses Druckniveau p3 liegt oberhalb des Druckniveaus pl. Der Übergang von dem Druckniveau p3 auf das mittels Algorithmus berechnete Druckniveau p2 erfolgt ebenfalls gemäß einer Übergangsfunktion. Bedingung für diesen Übergang ist das Erkennen einer Fahrstufe und das Überschreiten einer drehrichtungsgebundenen Drehzahlschwelle. Durch die Verwendung der drehrichtungsgebundenen Drehzahlschwelle wird rechtzeitig eine Kraftflußumkehr innerhalb des Variators erkannt, wenn z. B. das Fahrzeug rückwärts rollt.
Für Reversierschaltungen ist der Ablauf des Verfahrens folgendermaßen:
Mit Erkennen einer Reversierschaltung, z. B. D-N-R, wird die Ansteuerung des entsprechenden Schaltelements der Vorwärts-/Rückwärtsfahreinheit verzögert. Innerhalb der Verzögerungszeit wird dann der Variator vollständig entspannt, indem das Druckniveau in der Primär- und Sekundärscheibe auf Null verringert wird. Hierdurch wird ein Ausgleich der Trumkräfte im Zug- und Schubtrum erreicht. Mit anderen Worten: die Elemente des Schubgliederbandes ordnen sich während dieser Übergangsphase immer in den gleichen Ausgangszustand. Nach Ablauf der Verzögerungszeit T2 wird dann in der Primär- und Sekundärscheibe ein Druckniveau gemäß der Berechnung aus dem Algorithmus eingestellt.

Alternativ wird vorgeschlagen, beim Reversieren aus der Position D nach R in der Vorwärtsfahrkupplung den Druck nur auf einen Restdruck pR abzusenken, um ein künstliches Schleppmoment aufzubauen. Dieses Schleppmoment bewirkt eine Dämpfung der Drehmassen beim Durchlaufen der Variatorlose, d. h., Umkehr des Spirallaufes von D nach R. In gleicher Weise wird beim Reversieren von R nach D die Rückwärtsbremse mit einem Restdruck pR' beaufschlagt. Sobald das zuschaltende Schaltelement das Moment sicher übertragen kann, wird im abschaltenden Schaltelement der Restdruck pR bzw. pR' auf Null reduziert. Beim Reversieren wird quasi eine Überschneidungsschaltung auf Schleppmomentniveau durchgeführt.

### Bezugszeichen

- 1: Variator
- 2: Primärscheibenpaar
- 3: Sekundärscheibenpaar
- 4: Umschlingungsorgan
- 5: elektronische Getriebesteuerung
- 6: elektro-magnetische Druckregler
- 7: elektro-magnetische Druckregler
- 8: Schmiermittelsumpf
- 9: Pumpe
- 10: Wählhebel
- 11: Eingangsgrößen
- 12: Drehzahl Primärscheibe

## Patentansprüche

1. Verfahren zur Drucksteuerung eines stufenlos arbeitenden Getriebes des Kegelscheibenumschlingungstyps, bei dem ein elektronisches Getriebesteuergerät (5) aufgrund von Eingangsgrößen (10 bis 12) über elektro-magnetische Stellglieder (6, 7) das Druckniveau im Verstellraum der Primär- und der Sekundärscheibe bestimmt, wobei das erforderliche Druckniveau über einen Algorithmus zum Berechnen des Kräfteverhältnisses Pirmär- zu Sekundärscheibe bestimmt wird, und wobei mit Erkennen des Verlassens einer Neutral- oder Park-Position und Einlegen einer Vorwärts- oder Rückwärtsfahr-Position mittels eines Wählhebels (10) ein erhöhtes erstes Druckniveau (p1) in der Primär- und Sekundärscheibe ausgegeben wird, dadurch **gekennzeichnet**, daß das Druckniveau der Primärscheibe derart bestimmt wird, daß das Übersetzungsverhältnis nicht verändert wird, und daß mit Erkennen einer Fahrposition eine Zeitstufe (T1) gestartet wird, während der das Druckniveau in der Primär- und Sekundärscheibe vom ersten Druckniveau (p1) über eine Kennlinie auf ein zweites Druckniveau (p2) reduziert wird, wobei das zweite Druckniveau dem aus dem Algorithmus berechneten Druckniveau entspricht.

2. Verfahren nach Anspruch 1, dadurch **gekennzeichnet**, daß mit Überschreiten einer Getriebeausgangsdrehzahl-Schwelle (nAB > Grenzwert) und Vorwärts-Fahrtrichtungserkennung eine Zeitstufe (T1) gestartet wird, während der das Druckniveau in der Primär- und Sekundärscheibe vom ersten Druckniveau (p1) über eine Kennlinie auf ein zweites Druckniveau (p2) reduziert wird, hierbei das zweite Druckniveau (p2) dem aus dem Algorithmus berechneten Druckniveau entspricht.

3. Verfahren nach Anspruch 2 oder 2, dadurch **gekennzeichnet**, daß mit Erkennen einer Fahrstufe und eines erhöhten Getriebeeingangsmoments (MT > Grenzwert) das Druckniveau der Primär- und Sekundärscheibe auf ein drittes Druckniveau (p3) eingestellt wird, hierbei das dritte höher als das erste Druckniveau (p1) ist.

4. Verfahren zur Drucksteuerung eines stufenlos arbeitenden Getriebes des Kegelscheibenumschlingungstyps, bei dem ein elektronisches Getriebesteuergerät (5) aufgrund von Eingangsgrößen (10 bis 12) über elektro-magnetische Stellglieder (6, 7) das Druckniveau im Verstellraum der Primär- und der Sekundärscheibe bestimmt, wobei das erforderliche Druckniveau über einen Algorithmus zum Berechnen des Kräfteverhältnisses zwischen Primär- zu Sekundärscheibe bestimmt wird, dadurch **gekennzeichnet**, daß beim Reversieren des Wählhebels (10) von einer Vorwärts- zur Rückwärtsfahrstufe bzw. vice versa die Betätigung der Vorwärts- oder Rückwärtsfahrkupplung um eine Zeit( T2) verzögert, wobei während der Zeit (T2) das Druckniveau in der Primär- als auch der Sekundärscheibe zu Null verringert wird, so daß sich das System Kegelscheiben-/ Umschlingungsorgan vollständig entspannt.

5. Verfahren nach Anspruch 4, dadurch **gekennzeichnet**, daß nach Ablauf der Zeit (T2) das Druckniveau der Primär- und Sekundärscheibe auf das gemäß dem Algorithmus berechneten Druckniveau eingestellt wird.

6. Verfahren zur Drucksteuerung eines stufenlos arbeitenden Getriebes des Kegelscheibenumschlingungstyps, bei dem ein elektronisches Getriebesteuergerät (5) aufgrund von Eingangsgrößen (10 bis 12) über elektro-magnetische Stellglieder (6, 7) das Druckniveau im Verstellraum der Primär- und der Sekundärscheibe bestimmt, wobei das erforderliche Druckniveau über einen Algorithmus zum Berechnen des Kräfteverhältnisses zwischen Primär- zu Sekundärscheibe bestimmt wird, dadurch **gekennzeichnet**, daß beim Reversieren des Wählhebels (10) von einer Vorwärtszur Rückwärtsfahrstufe bzw. vice versa im abschaltenden Schaltelement das Druckniveau nicht auf Null reduziert wird, sondern ein Restdruck (pR) eingestellt wird, so daß sich am abschaltenden Schaltelement ein Schleppmoment einstellt, wobei der Restdruck (pR) so gewählt ist, daß die primärseitigen Drehmassen beim Durchlaufen der Variatorlose gedämpft werden.

## Claims

1. Method for controlling the pressure of a continuously variable transmission of the cone pulley belt contact type, in which an electronic transmission control mechanism (5) determines the pressure level in the adjustment space of the primary and the secondary pulley on the basis of input quantities (10 to 12) via electromagnetic actuators (6, 7), wherein the required pressure level is determined via an algorithm for calculating the ratio of forces between the primary and the secondary pulley, and wherein a raised first pressure level (p1) is delivered in the primary and secondary pulley upon detection of the departure from a neutral or parking position and engagement of a forward or reverse drive position by means of a selector lever (10), characterised in that the pressure level of the primary pulley is determined such that the transmission ratio is not varied, and that a time stage (T1) is started upon detection of a drive position, during which the pressure level in the primary and secondary pulley is reduced from the first pressure level (p1) via a characteristic to a second pressure level (p2), wherein the second pressure level corresponds to the pressure level calculated from the algorithm.

2. Method according to Claim 1, characterised in that a time stage (T1) is started upon a transmission output speed threshold (nAB > limit value) being exceeded and a forward drive direction being detected, during which the pressure level in the primary and secondary pulley is reduced from the first pressure level (p1) via a characteristic to a second pressure level (p2), the second pressure level (p2) in this case corresponding to the pressure level calculated from the algorithm.

3. Method according to Claim 1 or 2, characterised in that the pressure level of the primary and secondary pulley is set to a third pressure level (p3) upon detection of a drive stage and a raised transmission input torque (MT > limit value), the third pressure level in this case being higher than the first pressure level (p1).

4. Method for controlling the pressure of a continuously variable transmission of the cone pulley belt contact type, in which an electronic transmission control mechanism (5) determines the pressure level in the adjustment space of the primary and the secondary pulley on the basis of input quantities (10 to 12) via electromagnetic actuators (6, 7), wherein the required pressure level is determined via an algorithm for calculating the ratio of forces between the primary and the secondary pulley, characterised in that the operation of the forward or reverse drive clutch is delayed by a time (T2) when the selector lever (10) is reversed from a forward to the reverse drive stage or vice versa, wherein the pressure level in the primary and also the secondary pulley is reduced to zero during the time (T2), so that the cone pulley/contact member system relaxes completely.

5. Method according to Claim 4, characterised in that the pressure level of the primary and secondary pulley is set to the pressure level calculated according to the algorithm at the end of the time (T2).

6. Method for controlling the pressure of a continuously variable transmission of the cone pulley belt contact type, in which an electronic transmission control mechanism (5) determines the pressure level in the adjustment space of the primary and the secondary pulley on the basis of input quantities (10 to 12) via electromagnetic actuators (6, 7), wherein the required pressure level is determined via an algorithm for calculating the ratio of forces between the primary and the secondary pulley, characterised in that the pressure level is not reduced to zero in the disengaging shift element when the selector lever (10) is reversed from a forward to the reverse drive stage or vice versa, a residual pressure (pR) being set instead, so that a drag moment results at the disengaging shift element, wherein the residual pressure (pR) is selected such that the rotating masses on the primary side are damped upon passing through the variator.

## Revendications

1. Procédé pour réguler la pression d'une transmission progressive du type à poulies coniques et courroie dans laquelle un appareil de commande électronique (5) détermine en fonction de grandeurs d'entrée (10 à 12), par l'intermédiaire d'organes de réglage électromagnétiques (6, 7), le niveau de pression dans la chambre de réglage du disque primaire et du disque secondaire, par lequel le niveau de pression nécessaire est déterminé au moyen d'un algorithme pour le calcul du rapport de forces entre le disque primaire et le disque secondaire et par lequel, après détection qu'une position neutre ou position de stationnement a été quittée et qu'une position de marche avant ou de marche arrière a été enclenchée au moyen d'un levier de sélection (10), un premier niveau de pression élevé (p1) dans le disque primaire et le disque secondaire est mis en oeuvre, **caractérisé** en ce que le niveau de pression du disque primaire est défini de telle façon que le rapport de vitesse n'est pas changé et que, lors de la détection d'une position de marche, un espace de temps (T1) démarre pendant lequel le niveau de pression (p1) est réduit, selon une courbe caractéristique du premier niveau de pression, à un deuxième niveau de pression (p2), et en ce que le deuxième niveau de pression (p2) correspond au niveau de pression calculé à partir de l'algorithme.

2. Procédé selon la revendication 1, **caractérisé** en ce que, en cas de dépassement d'un seuil de la vitesse de sortie de la transmission (nAB > valeur limite) et la détection de la direction de la marche avant, un espace de temps (T1) démarre pendant lequel le niveau de pression dans le disque primaire et le disque secondaire est réduit selon une courbe caractéristique du premier niveau de pression (p1) au deuxième niveau de pression (p2), le deuxième niveau de pression (p2) correspondant au niveau de pression calculé à partir de l'algorithme.

3. Procédé selon la revendication 1 ou 2, **caractérisé** en ce que, après la détection d'une vitesse de marche et d'un couple élevé à l'entrée (MT > valeur limite), le niveau de pression du disque primaire et du disque secondaire est réglé à un troisième niveau de pression (p3), le troisième niveau de pression étant plus élevé que le premier niveau de pression (p1).

4. Procédé pour réguler la pression d'une transmission progressive du type à poulies coniques et courroie dans laquelle un appareil de commande électronique (5) détermine en fonction de grandeurs d'entrée (10 à 12), par l'intermédiaire d'organes de réglage électromagnétiques (6, 7), le niveau de pression dans la chambre de réglage du disque primaire et du disque secondaire, par lequel le niveau de pression nécessaire est déterminé au moyen d'un algorithme pour le calcul du rapport de forces entre le disque primaire et le disque secondaire, **caractérisé** en ce que, lors du renversement du levier de sélection (10) d'un palier de marche avant vers un palier de marche arrière ou vice versa, l'actionnement de l'embrayage de marche avant ou de marche arrière est retardé d'un temps (T2), et que le niveau de pression dans le disque primaire ainsi que dans le disque secondaire est réduit jusqu'à zéro pendant le temps (T2) de sorte que le système disques coniques et courroie est complètement détendu.

5. Procédé selon la revendication 4, **caractérisé** en ce que, après l'écoulement du temps (T2), le niveau de pression du disque primaire et du disque secondaire est réglé au niveau de pression calculé selon l'algorithme.

6. Procédé pour réguler la pression d'une transmission progressive du type à poulies coniques et courroie dans laquelle un appareil de commande électronique (5) détermine en fonction de grandeurs d'entrée (10 à 12), par l'intermédiaire d'organes de réglage électromagnétiques (6, 7), le niveau de pression dans la chambre de réglage du disque primaire et du disque secondaire, par lequel le niveau de pression nécessaire est déterminé au moyen d'un algorithme pour le calcul du rapport de forces entre disque primaire et disque secondaire, **caractérisé** en ce que, lors du renversement du levier de sélection (10) de la marche avant vers la marche arrière, ou vice versa, le niveau de pression n'est pas réduit à zéro dans l'élément de commande débrayé, mais une pression résiduelle (pR) est ajustée, de telle façon que, dans l'élément de commande en débrayage, il existe un couple d'entraînement, la pression résiduelle (pR) étant choisie telle que les masses rotatives côté primaire ont leur effet amorti lors du passage à travers le variateur de vitesse.
